**Europäisches Patentamt**

**European Patent Office**

**Office européen des brevets**

(19)

(11) Publication number : **0 169 109**
**B1**

(12)

# EUROPEAN PATENT SPECIFICATION

(45) Date of publication of patent specification :
**22.02.89**

(51) Int. Cl.⁴ : **B 23 B 47/18**

(21) Application number : **85401173.1**

(22) Date of filing : **13.06.85**

(54) **Retracting positive feed drill with idle mode.**

(30) Priority : **13.06.84 US 620354**
**12.07.84 US 630325**

(43) Date of publication of application :
**22.01.86 Bulletin 86/04**

(45) Publication of the grant of the patent :
**22.02.89 Bulletin 89/08**

(84) Designated contracting states :
**DE FR GB**

(56) References cited :
**US--A-- 3 512 434**

(73) Proprietor : **TITANOX S.A.**
**17, rue de Prony**
**F-92600 Asnieres (FR)**

(72) Inventor : **Vindez, G. Pierre**
**2107 Voorhees Avenue**
**Redondo Beach, CA. 90278 (US)**

(74) Representative : **Portal, Gérard et al**
**Cabinet Z. Weinstein 20, Avenue de Friedland**
**F-75008 Paris (FR)**

## Description

Background of the invention

This invention relates to positive feed power drills having a spindle drive gear train and a spindle feed gear train arranged to be driven by the same motor, and having means for disengaging and locking the spindle feed gear train for reversal of the positive feed drive, and more particularly to a system for holding the feed gear train disengaged from the drive gear train, but unlocked, after the spindle has been retracted and the retracting pressure has been removed from the piston, or to a system for ratcheting a feed coupling gear after the spindle has been advanced to a positive stop, thereby allowing the spindle to continue to be turned, but not further advanced, until it is retracted.

Positive feed power drills of the above type, as known from EP-A-060 186, normally have a single motor for turning a spindle through a drive gear train. The spindle is threaded into a feed gear that turns for advancing the spindle as the drill progresses through a work piece. The feed gear is driven by a gear train from the same motor as the drive gear train, but the gear ratio of the drive gear train is selected to be slightly less than the gear ratio of the feed gear train so the feed gear will turn slightly faster than the drive gear. In that way, the spindle is advanced a predetermined amount for each turn through the work piece.

Once the spindle has been advanced sufficiently, a hydraulic piston is actuated to disengage the spindle feed gear train from the drive gear train and lock it in place. As the motor continues to drive the spindle in the same direction, the spindle threads turn inside the locked feed gear to rapidly retract the spindle. Once the spindle has been fully retracted, the hydraulic pressure on the piston is still on, so the feed gear train now rotates at the same rate as the drive gear train, causing the engaging side teeth of the feed coupling gear to ratchet over the fixed teeth until pressure in the piston cylinder has been manually relieved. It would be desirable to provide means for eliminating the ratcheting by automatically removing the hydraulic pressure and holding the feed gear train out of engagement with the drive gear train after the hydraulic pressure is automatically removed from the piston, until such time as the holding means is manually reset to recycle the positive feed drill for another drilling or countersinking cycle.

The object of the invention in a first aspect is to provide a positive feed drill having a spindle drive gear train and a spindle feed gear train coupled to the drive gear train by side teeth on respective drive and feed coupling gears mounted on a common shaft, wherein the journal for said feed coupling gear is over a flange that is integral with said shaft, and there are provided a spring between said feed coupling gear and a housing for said gear trains to bias said feed coupling gear against said flange, and thereby to bias said shaft to a position where said feed coupling gear is coupled to said drive gear, fixed teeth on said housing for engagement with teeth on said feed coupling gear on the side thereof opposite said drive coupling gear, actuatable means for moving said shaft against said spring to disengage said feed coupling gear from said drive coupling gear and lock said feed coupling gear against said fixed teeth to retract said spindle, and upon deactuation of said actuatable means to automatically allow said feed coupling gear to be disengaged from said fixed teeth, characterised in that the positive feed drill also has an idle system comprising spring biased means, responsive to said shaft being moved to a position for said feed coupling gear to engage said fixed teeth upon actuation of said actuatable means, for limiting the return of said shaft upon deactuation of said actuatable means once said actuatable means has been actuated to move said shaft and feed coupling gear into locking position of said feed coupling gear, said spring biased means having a slot a dimension of which limits the return of said shaft so that said feed coupling gear is disengaged from said fixed teeth and not re-engaged with said teeth of said drive coupling gear until said spring biased means is manually reset.

In this positive feed drill, said spring biased means is a rod in a tube, said rod being perpendicular to said shaft at one end thereof remote from said return spring for said shaft and feed coupling gear and having a slot for receiving said shaft, the depth of said slot being the return limit dimension, and a spring in said tube is provided for moving said rod to a position where said slot is not under said shaft when said actuatable means is actuated to move said shaft out of said slot.

Moreover, said tube is closed at one end and said rod protrudes from the end of said tube opposite the closed end thereof, and a coiled compression spring is included between said rod and said closed end of said tube, whereby said idle system may be reset by pushing said rod back into said tube until said shaft drops into said slot.

A transverse pin is provided in said slot for limiting the extent to which said rod is moved out of said tube by said coiled compression spring upon actuation of said actuatable means.

Furthermore, said actuatable means is comprised of a hydraulic piston attached to the end of said shaft remote from said rod.

Moreover, said spring biased means rotates a disk on an axis spaced from the axis of said shaft a distance less than the radius of said disk, and there are provided a cutout sufficient to accommodate said shaft, a slot in said shaft of a depth sufficient for said disk to be rotated with the cutout thereof away from said shaft, thereby placing said disk in said slot to prevent a full return of said shaft, the length of said slot determining the extent of return until said disk is manually reset with its cutout aligned with said shaft, and a coiled torsion spring for automatically rotating said disk from said aligned position when said shaft is moved to place the slot thereof in alignment with said disk.

The disk includes an integral knob for manually turning said disk to reset said idle system.

The knob is of greater diameter than said disk, except over a limited sector which extends from the cutout of said disk over an angle of less than 90°, thereby limiting the extent said disk will rotate when said slot is aligned with said disk.

The actuatable means is comprised of a hydraulic piston at one end of said shaft.

The piston is at the end of said shaft remote from said disk.

Still another object is to provide in a second aspect of the invention a positive feed drill having a spindle drive gear train and a spindle feed gear train, coupled to the drive gear train by side teeth on respective drive and feed coupling gears mounted on a common shaft, including a spring between said feed coupling gear and a housing for said gear trains to bias said feed coupling gear against said drive coupling gear, whereby said feed coupling gear is coupled to said drive coupling gear to feed said spindle forward as it drills, characterised in that the positive feed drill further includes a positive stop for preventing said spindle from feeding further forward, thus causing said fed coupling gear to be driven by said spindle, and a slope on said side teeth on one side of each tooth for engaging said drive and coupling gears in order to allow said feed coupling gear to ratchet over said drive coupling gear when said spindle feed reaches said positive stop.

In this positive feed drill, the journal for said speed coupling gear is over a flange that is integral with said shaft and having fixed teeth on said housing for engagement with teeth on said feed coupling gear on the side thereof opposite said drive coupling gear, actuatable means for moving said shaft against said spring to disengage said feed coupling gear from said drive coupling gear and lock said feed coupling gear against said fixed teeth to retract said spindle, and upon deactuation of said actuatable means to automatically allow said feed coupling gear to be disengaged from said fixed teeth and re-engaged with said drive coupling gear after said spindle has been retracted.

Brief description of the drawings

Fig. 1 is a side view in elevation of a prior art positive feed drill for drilling holes through a work piece, as disclosed in EP-A-060 186.

Fig. 2 shows a vertical cross section of part of the drill shown in Fig. 1 with a modification embodying the invention shown in the feed mode.

Fig. 3 illustrates in an enlarged view the idle latching means of the embodiment shown in Fig. 2.

Figs. 4a and 4b illustrate in vertical cross sections that part of the drill shown in Fig. 2 embodying the invention in both the retract mode and the idle mode, respectively.

Fig. 5 is a top view of a positive feed drill having a second embodiment of the invention.

Fig. 6 is an enlarged top view of the idle latching means of the second embodiment shown in Fig. 5.

Fig. 7 is a cross section taken on a line 7-7 in Fig. 6.

Fig. 8 is a side view of the positive feed drill shown in Fig. 5.

Fig. 9 is a vertical cross section of that portion of the drill shown in Fig. 8 embodying the second embodiment while in the feed mode.

Figs. 10a and 10b illustrate in vertical cross sections that part of the drill shown in Fig. 9 embodying the invention in both the retract mode and the idle mode.

Fig. 11 is a side view in elevation of a positive feed drill, in which the invention to be described in a further embodiment with reference to Figs. 13 and 14 may be practiced.

Fig. 12 is a top view of the positive feed drill shown in Fig. 11.

Fig. 13 shows a vertical cross section of part of the drill shown in Fig. 11 with drive and feed coupling gears embodying the invention shown in the feed mode.

Fig. 14 illustrates in an exploded view the components of the invention shown in Fig. 13.

Figs. 14a and 14b illustrate in elevation the shapes of side teeth of the feed coupling gear shown in Fig. 14 with fixed teeth of the drive coupling gear and side teeth of the gear housing, respectively.

Description of preferred embodiments

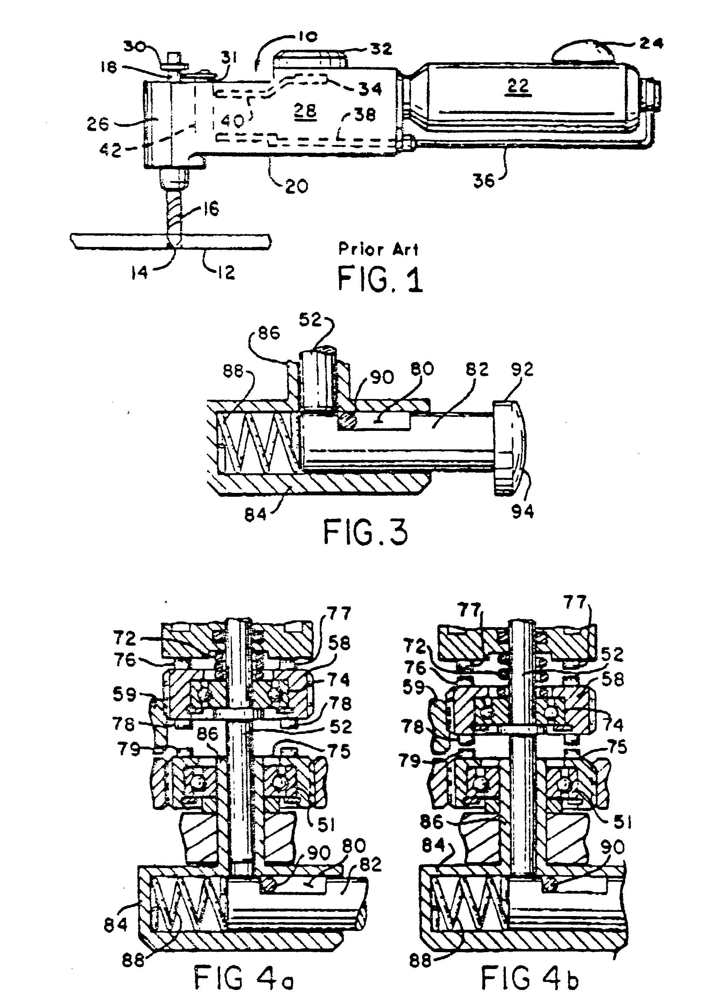

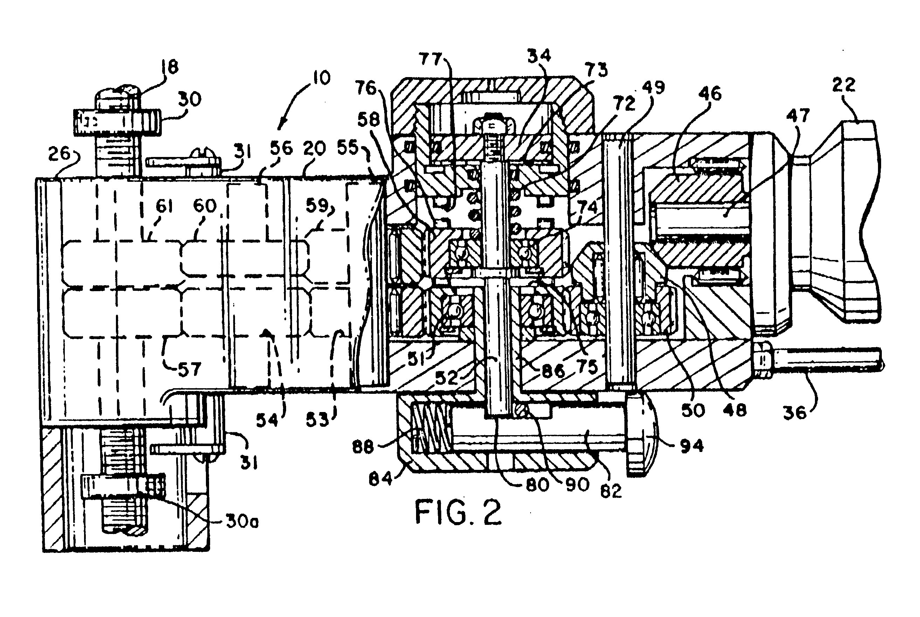

Referring to Fig. 1, a positive feed drill 10 is shown on a work piece 12 through which a hole 14 is to be made by a drill bit 16 on the end of a spindle 18. In practice, a spacer is attached to a main housing 20 of the drill, and the entire assembly is either clamped or hand held to the work piece. An air driven motor 22, with a hand operated lever switch 24, drives the spindle through a gear train in the main housing 20.

The main housing 20 encloses a spindle actuator section 26 and a gear train section 28. These two sections include a spindle drive gear train for turning the spindle and a spindle feed gear train for advancing the spindle as it turns. An adjustable nut 30 on the spindle 18 (fixed in a selected position by a set screw) actuates a valve stem 31 to cause the spindle to be retracted, as will be described more fully hereinafter. A cap 32 provides access to a piston 34 in the gear train section which disengages the spindle feed gear train and locks it so that continued turning of the spindle drive gear train retracts the spindle when the piston is caused to move up in a cylinder under pressure introduced through a tube 36 that couples air under pressure to the main housing.

Passages 38 and 40 convey air from the tube 36 to the piston via a valve 42. The valve system 31 is caused to move downwardly when the nut 30 on the spindle has reached the top of the valve stem after drilling. Moving the valve stem down causes the air passage 38 to be connected to the air passage 40 by the valve 42. This introduces air under pressure into the piston cylinder to raise the piston and disengage the spindle feed train thereby causing the spindle to be retracted. Once the valve stem is moved down, it will protrude from the bottom of the drill housing. A button on the end of the protruding valve stem is used to manually return the valve stem after the spindle is retracted. That automatically initiates another drilling cycle, unless the motor 22 has been turned off by lever switch 24.

Referring now to Fig. 2, which shows a vertical cross section of part of the main housing 20 attached to the motor 22, the general arrangement for driving and feeding the spindle 16 will first be described.

A beveled gear 46 keyed on the motor shaft 47 meshes with a beveled gear 48 on a vertical shaft 49. Integral with the beveled gear 48 is a gear 50 which meshes with a drive coupling gear 51 on a vertical shaft 52 for the spindle drive train comprised of idlers 53 and 54 on respective vertical shafts 55 and 56, and a gear 57 slidably keyed to the spindle 18. Mounted on the shaft 52 is a second coupling gear 58 for the spindle feed gear train comprised of idlers 59 and 60 on shafts 55 and 56, and a spindle feed gear 61 threaded on the spindle 18. As the motor turns, the gear 57 turns, thus turning the spindle. The key, or keys, which cause the spindle to rotate with the gear 57 slide in longitudinal slots or keyways (not shown) in the spindle so the spindle may advance.

The feed coupling gear 58 is normally locked onto the drive coupling gear 51 by side teeth so that it too is driven by the motor through the beveled gears 46 and 48, and the gear 50 locked with the beveled gear 48. Thus, the drive coupling gear 51 turns the feed coupling gear 58 through interlocking side teeth. The spindle feed gear 61 is thus turned throuyh the idlers 59 and 60 while the drive coupling gear 51 turns the spindle drive gear 57 through the idlers 53 and 54. If the gear ratios of both trains were the same, the spindle feed gear 61 would turn with the spindle drive gear 57, and the spindle 16 would not be advanced toward the work piece. Consequently, the gear ratio is made slightly higher for the feed gear 61 so that, as it turns faster than the spindle drive gear 57, its threads engaging the threaded spindle will feed the spindle toward the work piece at a rate proportional to the difference in speed of rotation of the years 57 and 61. This basic principle of positive feed drilling was first disclosed in 1890 in U.S. patent 434 576.

When the spindle has been advanced sufficiently for the nut 30 to actuate the valve stem 31, air under pressure is connected from the passage 38 to the passage 40 shown in Fig. 1. This air under pressure forces the piston 34 upwardly against the force of a compression coil spring 72 between the gear housing (outside of the piston cylinder 73) and bearing 74 supported on a flange 75 to engage upper side teeth 76 of the feed coupling gear 58 with fixed teeth 77 on the inside of the gear housing. This locks the feed gear train and causes the spindle to be retracted as the drive gear 57 continues to rotate in the same direction, until the valve stem is returned to its initial position by nut 30a to release pressure from the piston cylinder, thereby allowing the spring 72 to return the feed coupling gear 58 to its initial position in engagement with the feed coupling gear.

A first embodiment of the present invention shown in Fig. 3 will now be described. The shaft 52 is raised by the piston 34 to lock the feed gear train, as shown in Fig. 4a. The end of the shaft opposite the piston is thus raised out of engagement with a notch 80 in a rod 82 guided in a tube 84 that is made as a unitary part of a sleeve 86 for the shaft 52 on which the drive coupling gear 51 is journaled with a ball bearing so that the shaft 52 may move axially without raising the drive coupling gear for that would bring it into engagement with the idler 59 for the feed gear train. A compression coil spring 88 then pushes the rod so that the notch 80 is no longer in alignment with the shaft, as shown in Fig. 4a. A transverse pin 90 prevents the notched rod from being pushed completely out of the guide tube 84. At the end of the spindle return a nut 30a, which is adjustable on the spindle 18 to limit the return stroke, moves the valve 31 to the upper position where it cuts off the air pressure to the piston 34 and opens the piston cylinder to exhaust.

Once the spindle is retracted, and the air pressure in the piston cylinder is released, the feed coupling gear 58 is pushed out of locking engagement with teeth 77 on the gear housing by the spring 72, as shown in Fig. 4b, but the bottom of the shaft 52 is then seated against the rod 82, so that the feed coupling gear does not drop far enough for its lower side teeth 78 to re-engage upper side teeth 79 on the drive coupling gear 51. The tool is then in an idle mode.

To reset the spindle feed gear train for the next drilling or countersinking operation, the rod 82 is manually pushed back into the guide tube 84 against the force of the spring 88. The coil compression spring 72 then restores the feed coupling gear 58 to its normal position shown in Fig. 2, which is the feed mode.

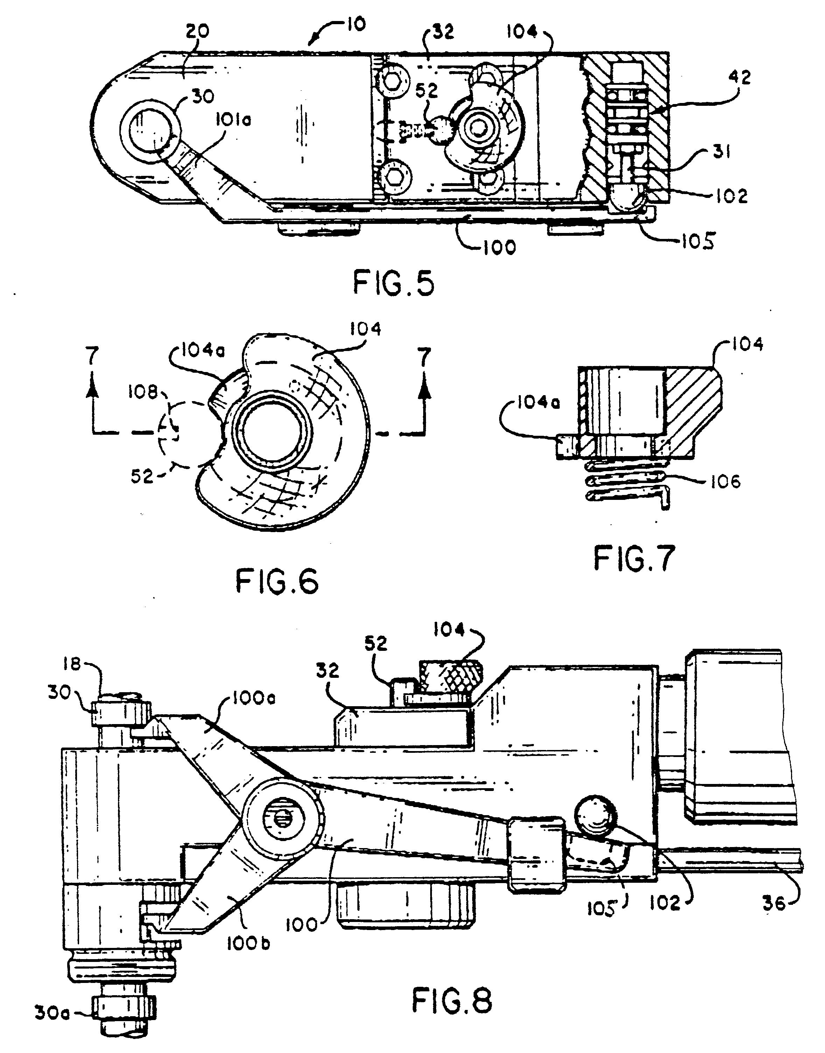

Referring now to Figs. 5-10, a second embodiment of the invention provides the idle latching means at the top of the shaft 52 to hold the feed coupling gear up upon retraction of the spindle, and places the piston 34 at the bottom of the shaft 52 to push the shaft up. However, the principle is the same, and to facilitate understanding this second embodiment, the same reference numerals are used for the parts common to both embodiments.

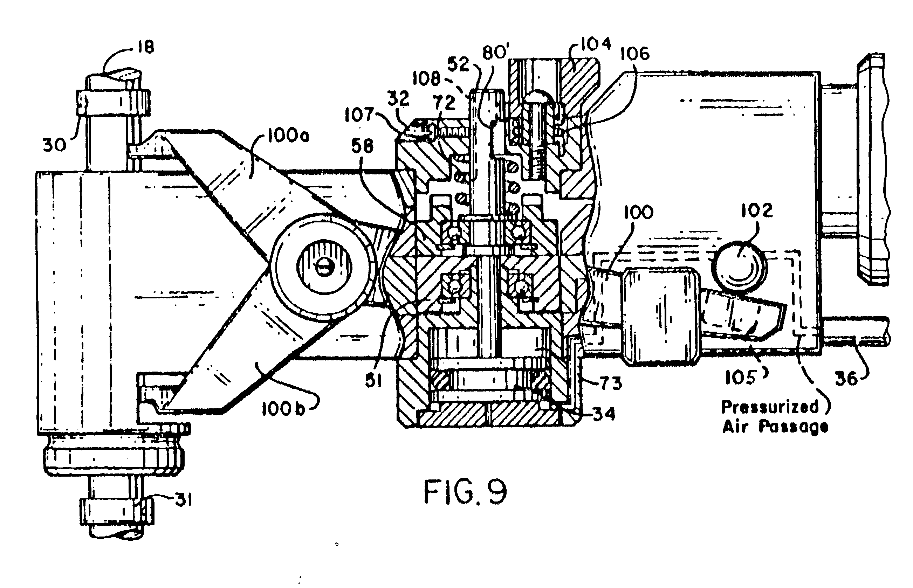

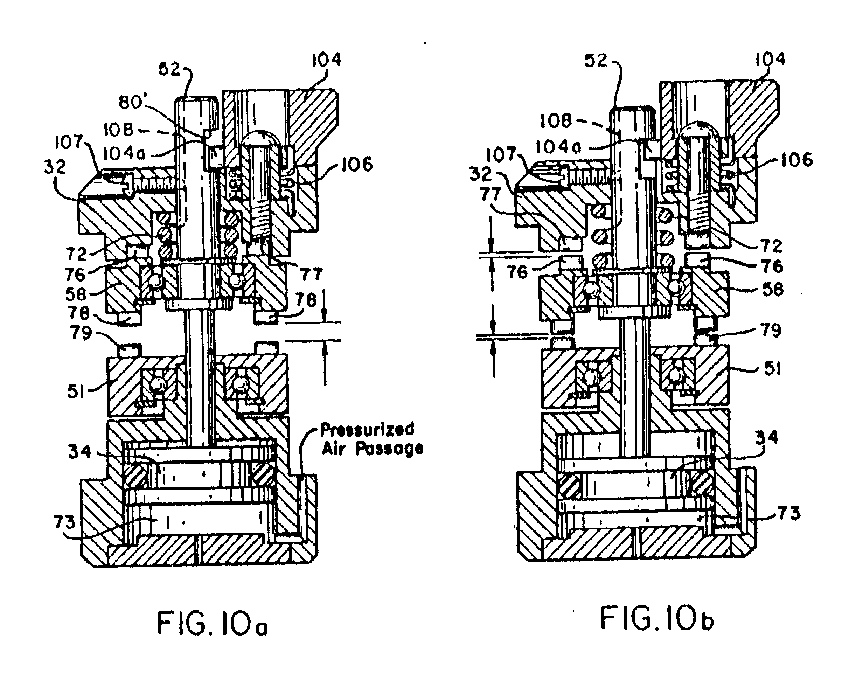

Basically, the positive feed drill 10 of the second embodiment is the same, but smaller. It has a drive gear train and a feed gear train arranged in the same way. However, because the housing 20 is much smaller, the valve 42 for retracting the spindle is at the rear of the tool, as shown in Fig. 5. When the spindle 18 is fed forward sufficiently, a nut 30 engages an arm 100a and pivots a Y-shaped lever 100. This pushes the lever 100 over a rounded end 102 of the valve stem. The part of the lever 100 which rides over that rounded end 102 has a slot 105 that is beveled so that as the lever 100 is pivoted, it gradually presses against the rounded end 102 and pushes the valve stem 31 in against air pressure from line 36 to open the valve. The valve is designed in a known manner so that once it is cracked open, the air pressure will quickly move the valve stem into its fully open position. This admits air under pressure into the piston cylinder 73, shown in Fig. 9, thus pushing the piston 34 upwardly, as shown in Fig. 10a, to lift the shaft 52, and thereby lift the feed coupling gear 58 out of engagement with the drive coupling gear 51, and into engagement with teeth 77 on the inside of the gear housing cap 32 to lock the feed gear train and thus retract the spindle as before.

When the spindle is retracting, a nut 30a at the lower end of the spindle similar to nut 30 engages an arm 100b and pivots the Y-shaped lever 100 clockwise to release the valve stem 31. This releases air pressure from the piston cylinder 73 and allows the coil compression spring 72 to push the feed coupling gear downwardly, thus disengaging upper side teeth 76 of the feed coupling gear 58 from locking teeth 77 on the inside of the gear housing cap 32. This also pushes the shaft 52 downwardly toward the drive position shown in Fig. 9, to an intermediate idling position where the feed coupling gear engages neither the teeth 77 on the inside the gear housing cap 32, nor teeth 79 on the top of the drive coupling gear 51, just as in the first embodiment. The only difference is in the arrangement of the idle latching means, which will now be described.

With the piston 34 arranged to be at the bottom of the shaft 52, the idle latching means is more conveniently located at the opposite end (the top) of the shaft 52. In that case, a latching slot 80' is provided in the shaft, and a pivotal latching means 104 is arranged to pivot a latch 104a into that slot when the shaft has been raised to a position that places the slot in alignment with the latch 104a. Fig. 6 shows the pivotal latching means in a top view which is essentially a knurled knob having about 135° cut out to permit it to pivot about 40° counterclockwise from the position shown in Fig. 6 relative to the shaft 52 when the slot 80' is aligned with the latch 104a. The latter is preferably, but not necessarily, formed as a unitary part of the pivotal latching means 104.

A coil torsional spring 106 pivots the latch means when the slot in the shaft 52 is so aligned with the latch 104a. Note that it is this latch 104a against the shaft, as shown in Fig. 6, that prevents pivoting of the latching means 104, until the piston 34 raises the shaft. The slot in the shaft is long enough to permit locking the feed gear train, as shown in Fig. 10a, thus retracting the spindle, but the top of the slot 80' prevents the shaft 52 from being returned to the drive position shown in Fig. 9 until the locking means 104 is manually turned clockwise (when viewed from above as in Fig. 5) about 40° to withdraw the latch 104a from the slot 80'. In that way, the positive feed drill is placed in the idle mode shown in Fig. 10b when the air pressure in piston cylinder is released once the lever 100 releases the valve stem 31. It will remain in the idle mode until the latching means 104 is manually turned 40° clockwise so that the latch 104a disengages the slot 80' to release the shaft 52. A set screw 107 in a groove 108 holds the shaft 52 against rotation, but allows the shaft to move up and down with the set screw sliding in the groove.

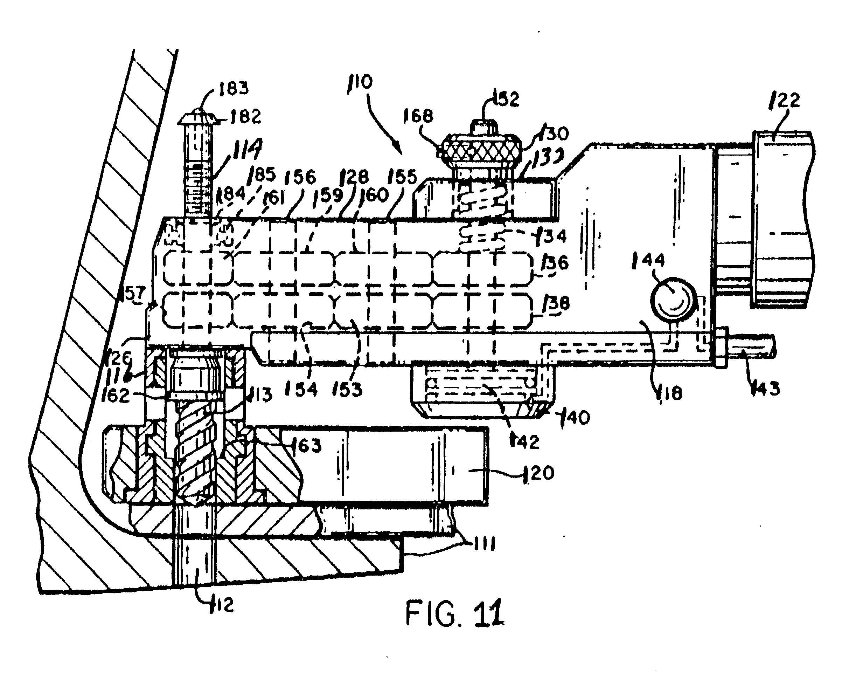

Referring now to Fig. 11, a positive feed drill 110 is shown on a work piece 111 through which a hole 112 is made by a drill bit 113 on the end of a threaded spindle 114. In practice, a spacer 116 is attached to a main housing 118 of the drill, and the entire assembly is clamped by some means 120 to the work piece. An air driven motor 122, with a hand operated lever switch (not shown) drives the spindle through a gear train in the main housing 118. The drill described thus far is generally organized the same as in a positive feed drill disclosed in greater detail in Fig. 2.

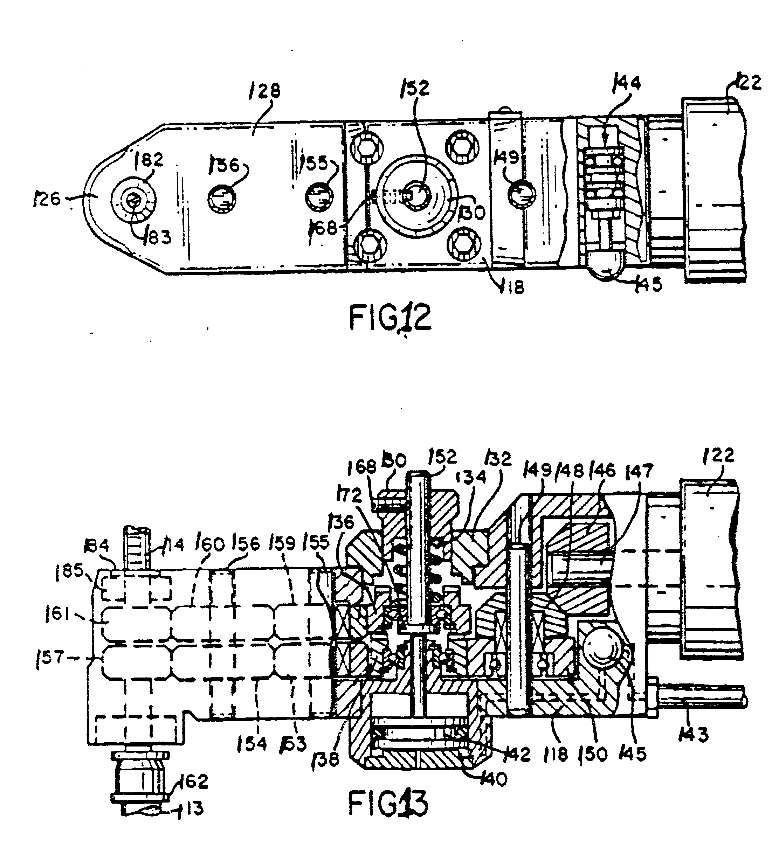

The main housing 118 encloses a spindle actuator section 126 and a gear train section 128. These two sections include a spindle drive gear train for turning the spindle, and a spindle feed gear train for advancing the spindle as it turns. An adjustment knob 130 on an upper housing cap 132 adjusts the compression of a coil spring 134 which holds a feed coupling gear 136 down on a drive coupling gear 138, as will be described more fully hereinafter. A cylinder 140 houses a piston 142 which, when caused to move up in the cylinder 140, disengages the spindle feed gear train and locks it so that continued turning of the spindle drive gear train retracts the spindle. The piston is caused to move up in the cylinder 140 under pressure introduced from a tube 143 through a valve 144 (shown in Fig. 12) manually operated by pushing the protruding end 145 of the valve stem. Once the spindle is fully retracted, the drive motor 122 is turned off manually. That shuts off air pressure to the valve, allowing it to open and vent the cylinder 140 thereby allowing the feed coupling gear to again be engaged to the drive coupling gear.

Referring now to Fig. 13, which shows a vertical cross section of part of the main housing 118 attached to the motor 122, the general arrangement for driving and feeding the spindle 114 will first be described.

A beveled gear 146 keyed on the motor shaft 147 meshes with a beveled gear 148 on a vertical shaft 149. Integral with the beveled gear 148 is a gear 150 which meshes with the drive coupling gear 138 on a vertical shaft 152 for the spindle drive train comprised of idlers 153 and 154 on respective vertical shafts 155 and 156, and a spindle drive gear 157 slidably keyed to the spindle 114. Mounted on the shaft 152 is the feed coupling gear 136 for the spindle feed gear train comprised of idlers 159 and 160 on shafts 155 and 156, and a spindle feed gear 161 threaded on the spindle 114. As the motor turns, the drive coupling gear 138 turns, thus turning the spindle. The key, or keys, which cause the spindle to rotate with the drive gear 157 slide in longitudinal slots or keyways (not shown) in the spindle so the spindle may advance.

The feed coupling gear 136 is normally locked onto the drive coupling gear 138 by side teeth so that it too is driven by the motor through the beveled gears 146 and 148, and the gear 150 locked with the beveled gear 148. Thus, the drive coupling gear 138 turns the feed coupling gear 136 through interlocking side teeth. The spindle feed gear 161 is thus turned through the idlers 159 and 160 while the drive coupling gear 138 turns the spindle drive gear 157 through the idlers 153 and 154. If the gear ratios of both trains were the same, the spindle feed gear 161 would turn with the spindle drive gear 157, and the spindle 114 would not be advanced toward the work piece. Consequently, the gear ratio is made slightly higher for the feed year 161 so that, as it turns faster than the spindle drive gear 157, its threads engaging the threaded spindle will feed the spindle toward the work piece at a rate proportional to the difference in speed of rotation of the gears 157 and 161.

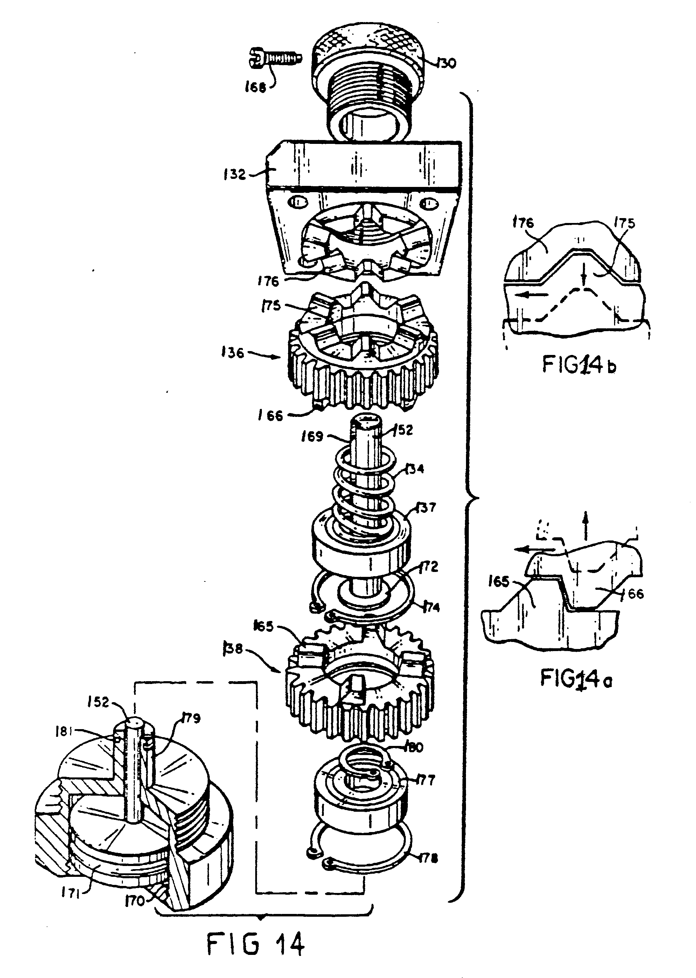

When the spindle has been advanced sufficiently for a flanged end 162 of the spindle 114 to be stopped by an abutment 163 (shown in Fig. 11), or any other means, the spindle advance must stop, thereby causing the turning spindle to cause the feed drive gear 161 to turn (due to the threads of the turning spindle engaging threads in the feed gear 161). This in turn causes the entire spindle feed gear train to turn, while the spindle drive gear 157 continues to turn the spindle. Because of the differential in the gear ratios, the feed coupling gear 136 will now be caused to turn slower than the drive coupling gear 138. This is made possible by properly shaping the side teeth coupling of those two gears, as shown in the exploded view in Figs. 14 and 14a, so the gear differential is now absorbed at this point by ratcheting of the feed coupling gear over the drive coupling gear.

Each of the upper teeth 165 of the drive coupling gear 138 is provided with a steep slope (about 15° from the vertical) on the face that engages the equally sloped face of tooth 166 of the drive coupling gear as shown in Fig. 14a. The tooth 166 is on the lower side of the feed coupling gear 136. The other faces of the teeth 165 and 166 are sloped about 45° from the vertical, so when the spindle is stopped by the abutment 163, and the feed gear train is driven by the turning spindle (due to the threads engaging the feed gear 161), the feed coupling gear will now turn slower than the drive coupling gear by the amount of the gear differential between the feed and drive gear trains. The 15° slope will then permit the feed coupling gear teeth 166 to ride up on the side teeth 165 of the drive coupling gear against the force of the coil spring 134. The 45° angle on the other faces allow the feed coupling gear to seat back on the drive coupling gear more gently than if the faces were, for example, at less than 1° slope. The force of the compression coil spring 134 may be adjusted by screwing the knob 130 in or out of a cap 132 to give more or less driving force before the coupling gears overran each other. A set screw 168 fits into a slot 169 in the shaft, which protrudes through the knob, so that the knob cannot unscrew by itself and change the compression of the spring.

Once the spindle stops and the feed coupling gear 136 begins to ratchet over the drive coupling gear 138, the operator presses the end 145 of the valve stem to actuate the valve 144 shown in Fig. 12. This will introduce air under pressure into the piston cylinder 140 to cause the piston 142 to push the shaft 152 up, as may best be seen in Fig. 13. A flange 172 on the shaft raises a bearing 137 against the force of the spring 134. The feed coupling gear 136 is seated on the bearing 137, and held on that bearing by a retainer 174, so it too is raised, not only enough to disengage side teeth 165 and 166 of the drive and feed coupling gears, but also enough to engage upper side teeth 175 of the feed coupling gear with fixed teeth 176 on the inside of the gear housing, or more specifically the gear housing cap 132. The teeth are shaped with 45° slopes on both sides, as shown in Fig. 14a, for smooth locking engagement, and ratcheting once the spindle is fully retracted.

Once these locking teeth are engaged under the pressure of the piston 171, the feed coupling gear will not turn. That locks the feed gear train so that as the drive gear train continues to turn, the spindle is rapidly retracted in accordance with the basic principle of the positive feed drill first disclosed in the aforesaid 1890 patent US-A-434 576. Once fully retracted, the feed gear 161 will rotate with the spindle, thus causing the feed coupling gear to ratchet over locking teeth 176 on the cap 132.

It should be noted that the drive coupling gear 138 is seated on a bearing 177 and that the bearing is held in the drive coupling gear by a retainer 178. The bearing 177 is in turn seated over a sleeve 179 extending upwardly from the piston cylinder housing 170, and locked in place by a retainer 180 which fits into a groove 181 on the sleeve 179. The result is that the drive coupling gear 138 does not move up and down with the piston 171. Only the feed coupling gear is caused to move up when air pressure moves the piston 171 up. Once the spindle is retracted, the operator releases the end 144 of the valve stem to relieve the air pressure in the piston cylinder 170. This will allow the spring 134 to return the feed coupling gear 136 in engagement with the drive coupling gear 138 through their side teeth 166 and 165. Meantime, the motor 122 is turned off before relieving the air pressure in the cylinder 170 so that the spindle will not be driven forward again until the positive feed drill is set up for another drilling cycle.

In another application of this invention, when the operator cannot see the drill as it operates to know when it has drilled through the work piece, the spindle is stopped from the top by the cap 182 (shown in Fig. 11) of greater diameter than the spindle. That cap is secured to the spindle by a screw 183 to provide a positive stop at the full forward limit of the spindle. When the cap 182 reaches the limit, it seats on a disk 184 that fits over the inner race of the ball bearing 185 so that as the spindle continues to turn, that inner race, disk 184 and cap 182, turn in unison. Without the spindle being fed further forward, the gear 161 must turn due to the turning threads of the spindle. It can thus be appreciated that the spindle feed can also be stopped from the top while drilling. However, for precision such as while countersinking a drilled hole, it is preferable to provide a positive stop in a fixture between the drill and the work piece. Various designs for such fixtures are known. The particular design used in any one application is determined by the nature of the application.

Although particular embodiments of the invention have been described and illustrated herein, it is recognized that modifications and variations may readily occur to those skilled in the art, the scope of protection being determined by the attached claims.

**Claims**

1. Positive feed drill (10) having a spindle drive gear train (51, 53, 54, 57) and a spindle feed gear train (55, 59, 60, 61) coupled to the drive gear train by side teeth (78, 79) on respective drive and feed coupling gears (51, 58) mounted on a common shaft (52), wherein the positive feed drill also has the journal for said feed coupling gear (58) is over a flange that is integral with said shaft (52), and there are provided a spring (72) between said feed coupling gear (58) and a housing for said gear trains to bias said feed coupling gear (58) against said flange, and thereby to bias said shaft to a position where said feed coupling gear (58) is coupled to said drive gear (51), fixed teeth (77) on said housing for engagement with teeth (76) on said feed coupling gear (58) on the side thereof opposite said drive coupling gear (51), actuatable means for moving said shaft against said spring (72) to disengage said feed coupling gear (58) from said drive coupling gear (51) and lock feed coupling gear (58) against said fixed teeth (77) to retract said spindle, and upon deactuation of said actuatable means to automatically allow said feed coupling gear (58) to be disengaged from said fixed teeth (77), characterized in that an idle system comprising spring biased means (82), responsive to said shaft (52) being moved to a position for said feed coupling gear (58) to engage said fixed teeth (77) upon actuation of said actuatable means (34), for limiting the return of said shaft (52) upon deactuation of said actuatable means once said actuatable means has been actuated to move said shaft (52) and feed coupling gear (58) into locking position of said feed coupling gear, said spring biased means having a slot (80, 80') a dimension of which limits the return of said shaft so that said feed coupling gear (58) is disengaged from said fixed teeth (77) and not re-engaged with said teeth of said drive coupling gear (51) until said spring biased means is manually reset.

2. Positive feed drill according to claim 1, characterized in that said spring biased means is a rod (82) in a tube, said rod (82) being perpendicular to said shaft (52) at one end thereof remote from said return spring for said shaft and feed coupling gear and having a slot (80) for receiving said shaft (52), the depth of said slot (80) being the return limit dimension, and a spring (88) in said tube for moving said rod (82) to a position where said slot (80) is not under said shaft (52) when said actuatable means is actuated to move said shaft out of said slot.

3. Positive feed drill according to claim 1, characterized in that said tube is closed at one end and said rod (82) protrudes from the end of said tube opposite the closed end thereof, and a coiled compression spring (88) is included between said rod (82) and said closed end of said tube, whereby said idle system may be reset by pushing said rod back into said tube until said shaft (52) drops into said slot (80).

4. Positive feed drill according to claim 3, characterized in that said tube includes a transverse pin (90) in said slot (80) for limiting the extent to which said rod (82) is moved out of said tube by said coiled compression spring (88) upon actuation of said actuatable means (34).

5. Positive feed drill according to claim 4, characterized in that said actuatable means is comprised of a hydraulic piston (34) attached to the end of said shaft (52) remote from said rod (82).

6. Positive feed drill according to claim 1, characterized in that said spring biased means rotates a disk (104a) on an axis spaced from the axis of said shaft (52) a distance less than the radius of said disk, and there are provided a cutout sufficient to accommodate said shaft (52), a slot in said shaft (52) of a depth sufficient for said disk to be rotated with the cutout thereof away from said shaft, thereby placing said disk in said slot (80) to prevent a full return of said shaft, the length of said slot determining the extent of return until said disk is manually reset with its cutout aligned with said shaft, and a coiled torsion spring (106) for automatically rotating said disk (104a) from said aligned position when said shaft is moved to place the slot thereof in alignment with said disk (104a).

7. Positive feed drill according to claim 6, characterized in that said disk (104a) includes an integral knob (104) for manually turning said disk (104a) to reset said idle system.

8. Positive feed drill according to claim 7, characterized in that said knob (104) is of greater diameter than said disk (104a), except over a limited sector which extends from the cutout of said disk over an angle of less than 90°, thereby limiting the extent said disk will rotate when said slot is aligned with said disk.

9. Positive feed drill according to claim 6, characterized in that said actuatable means is comprised of a hydraulic piston (34) at one end of said shaft.

10. Positive feed drill according to claim 9, characterized in that said piston (34) is at the end of said shaft (52) remote from said disk (104a).

11. Positive feed drill having a spindle drive gear train (138, 153, 154, 157) and a spindle feed gear train (136 159, 160, 161), coupled to the drive gear train by side teeth (165, 166) on respective drive and feed coupling gears (138, 136) mounted on a common shaft (152), the positive feed drill further includes said positive feed drill including a spring (134) between said feed coupling gear (136) and a housing for said gear trains to bias said feed coupling gear (136) against said drive coupling gear (138), whereby said feed coupling gear (136) is coupled to said drive coupling gear (138) to feed said spindle (114) forward as it drills, characterized in that a positive stop (162, 163) for preventing said spindle (114) from feeding further forward, thus causing said fed coupling gear to be driven by said spindle (114), and a slope on said side teeth (165, 166) on one side of each tooth for engaging said drive and coupling gears in order to allow said feed coupling gear (136) to ratchet over said drive coupling gear (138) when said spindle feed reaches said positive stop (162, 163).

12. Positive feed drill according to claim 11, characterized in that the journal for said speed coupling gear is over a flange (172) that is integral with said shaft (152) and having fixed teeth (176) on said housing for engagement with teeth (175) on said feed coupling gear on the side thereof opposite said drive coupling gear (138), actuatable means (142) for moving said shaft (152) against said spring (134) to disengage said feed coupling gear (136) from said drive coupling gear (138) and lock said feed coupling gear against said fixed teeth (176) to retract said spindle (114), and upon deactuation of said actuatable means to automatically allow said feed coupling gear (136) to be disengaged from said fixed teeth (176) and re-engaged with said drive coupling gear (138) after said spindle has been retracted.

**Patentansprüche**

1. Bohrer (10) mit Vorschubantrieb mit einem Getriebezug (51, 53, 54, 57) zum Spindelantrieb und einem Getriebezug (58, 59, 60, 61) zum Spindelvorschub, der mit dem Antriebsgetriebezug durch Seitenzähne (78, 79) gekuppelt ist, die auf auf einer gemeinsamen Welle (52) montierten Antriebs- und Vorschubskupplungsgetriebe (51, 58) geordnet sind, wobei das besagte Vorschubskupplungsgetriebe (58) über einen mit der besagten Welle (52) einstückigen Flansch rotierbar ist, und eine Feder (72) zwischen dem besagten Vorschubskupplungsgetriebe (58) und einem Gehäuse für die besagten Getriebezüge zum Auslagern des besagten Vorschubskupplungsgetriebes (58) gegen den Flansch, und somit zum Auslagern der besagten Welle in eine Lage, in der das besagte Vorschubskupplungsgetriebe (58) mit dem besagten Antriebsgetriebe (51) gekuppelt ist, stationäre Zähne (77) auf dem besagten Gehäuse zum Eingriff mit Zähnen (76) auf dem besagten Vorschubskupplungsgetriebe (58) auf dessen dem besagten Antriebskupplungsgetriebe (51) gegenüberliegenden Seite, betätigbare Mittel zum Verschieben der besagten Welle gegen die besagte Feder (72) um das besagte Vorschubskupplungsgetriebe (58) aus dem besagten Antriebskupplungsgetriebe (51) außer Eingriff zu bringen und das besagte Vorschubskupplungsgetriebe (58) gegen die besagten stationären Zähne (77) zu blockieren zum Rückzug der besagten Spindel, und durch Desaktivieren des besagten betätigbaren Mittels, um das besagte Vorschubskupplungsgetriebe (58) aus den besagten stationären Zähnen (77) automatisch außer Eingriff zu bringen, vorgesehen sind, dadurch gekennzeichnet, daß der Bohrer mit Vorschubantrieb ein Leerlaufstellungssystem mit einem federverschobenen Mittel (82) aufweist, das für eine Bewegung der besagten Welle (52) in eine Stellung empfindlich ist, in der das besagte Vorschubskupplungsgetriebe (58) in die besagten stationären Zähne (77) eingreift, durch Betätigen des besagten betätigbaren Mittels (34) zur Begrenzung des Rückzugs der besagten Welle (52) durch Desaktivierung des besagten betätigbaren Mittels, nachdem das besagte betätigbare Mittel betätigt worden ist zur Verschiebung der besagten Welle (52) und des Vorschubkupplungsgetriebes (58) in die Blockierungslage des besagten Vorschubskupplungsgetriebes, wobei das besagte federverschobene Mittel einen Spalt (80, 80') aufweist, von dem ein Maß den Rückzug der besagten Welle begrenzt, so daß das besagte Vorschubskupplungsgetriebe (58) aus den besagten stationären Zähnen (77) außer Eingriff kommt und mit den besagten Zähnen des besagten Antriebskupplungsgetriebes (51) nicht wieder eingreift, bis das besagte federverschobene Mittel mit der Hand in die Ausgangslage zurückgeführt wird.

2. Bohrer mit Vorschubantrieb nach Anspruch 1, dadurch gekennzeichnet, daß das besagte federverschobene Mittel eine Stange (82) in einem Rohr ist, wobei die besagte Stange (82) senkrecht zur besagten Welle (52) auf einem Ende derselben entfernt von der besagten Rückzugsfeder für die besagte Welle und das besagte Vorschubskupplungsgetriebe ist und einen Spalt (80) aufweist zur Aufnahme der besagten Welle (52), wobei die Tiefe des besagten Spalts (80) das den Rückzug begrenzende Maß ist, und einer Feder (88) im besagten Rohr zur Verschiebung der besagten Stange (82) in eine Lage, in der der besagte Spalt (80) nicht unter der besagten Welle (52) liegt, wenn das besagte betätigbare Mittel betätigt wird zur Verschiebung der besagten Welle aus dem besagten Spalt.

3. Bohrer mit Vorschubantrieb nach Anspruch 2, dadurch gekennzeichnet, daß das besagte Rohr an einem Ende geschlossen ist und daß die besagte Stange (82) aus dem dem geschlossenen Ende des Rohrs gegenüberliegenden Ende des besagten Rohrs vorspringt, und eine Sprungdruckfeder (88) zwischen der besagten Stange (82) und dem besagten geschlossenen Ende des besagten Rohrs angeordnet ist, wobei das besagte Leerlaufstellungssystem durch Zurückdrücken der besagten Stange in das besagte Rohr, bis die besagte Welle (52) in den besagten Spalt (80) fällt, in die Ausgangslage zurückgeführt werden kann.

4. Bohrer mit Vorschubantrieb nach Anspruch 3, dadurch gekennzeichnet, daß das besagte Rohr einen Quernocken (90) im besagten Spalt (80) aufweist, zur Begrenzung des Maßes, in dem die besagte Stange (82) aus dem besagten Rohr von der besagten Sprungdruckfeder (88) durch Betätigung des besagten betätigbaren Mittels (34) verschoben wird.

5. Bohrer mit Vorschubantrieb nach Anspruch 4, dadurch gekennzeichnet, daß das besagte betätigbare Mittel einen hydraulischen Kolben (34) aufweist, der am Ende der besagten Welle (52) entfernt von der besagten Stange (82) befestigt ist.

6. Bohrer mit Vorschubantrieb nach Anspruch 1, dadurch gekennzeichnet, daß das besagte federverschobene Mittel einen Teller (104a) auf einer Achse dreht, die von der Achse der besagten Welle (52) bei einem kürzeren Abstand als dem Radius des besagten Tellers entfernt ist, und daß eine zur Aufnahme der besagten Welle (52) ausreichende Kerbe, ein Spalt in der besagten Welle (52) mit einer ausreichenden Tiefe zur Drehung des besagten Tellers mit dessen Kerbe entfernt von der besagten Welle, wobei der besagte Teller in dem besagten Spalt (80) gelagert wird, zur Verhinderung eines totalen Rückzugs der besagten Welle, und wobei die Länge des besagten Spalts das Maß des Rückzugs bestimmt, bis der besagte Teller mit der Hand in die Ausgangslage zurückgeführt wird und dessen Kerbe mit der besagten Welle in Gleichrichtung liegt, und eine Sprungverdrehungsfeder (106) zur automatischen Drehung des besagten Tellers (104a) aus der besagten gleichgerichteten Lage, wenn die besagte Welle zur Stellung deren Spalt in Gleichrichtung mit dem besagten Teller (104a) verschoben ist, vorgesehen sind.

7. Bohrer mit Vorschubantrieb nach Anspruch 6, dadurch gekennzeichnet, daß der besagte Teller (104a) einen eingebauten Knopf (104) aufweist zur Drehung des besagten Tellers (104a) mit der Hand, um das besagte Leerlaufstellungssystem in die Ausgangslage zurückzuführen.

8. Bohrer mit Vorschubantrieb nach Anspruch 7, dadurch gekennzeichnet, daß der Durchmesser des besagten Knopfes (104) größer ist als der Durchmesser des besagten Tellers (104a), außer über einem begrenzten Sektor, der sich von der Kerbe des besagten Tellers über einen Winkel von weniger als 90° erstreckt, wobei das Maß gemäß dem der besagte Teller sich dreht, wenn der besagte Spalt in Gleichrichtung mit dem besagten Teller liegt, begrenzt ist.

9. Bohrer mit Vorschubantrieb nach Anspruch 6, dadurch gekennzeichnet, daß das besagte betätigbare Mittel einen hydraulischen Kolben (34) am Ende der besagten Welle aufweist.

10. Bohrer mit Vorschubantrieb nach Anspruch 9, dadurch gekennzeichnet, daß der besagte Kolben (34) am vom besagten Teller (104a) entfernten Ende der besagten Welle (52) angeordnet ist.

11. Bohrer mit Vorschubantrieb mit einem Getriebezug (138, 153, 154, 157) zum Spindelantrieb und mit einem Getriebezug (136, 159, 160, 161) zum Spindelvorschub, der mit dem Antriebsgetriebezug durch Seitenzähne (165, 166) gekuppelt ist, die auf auf einer gemeinsamen Welle (152) montierten Antriebs- und Vorschubskupplungsgetriebe (138, 138) angeordnet sind, wobei der besagte Bohrer mit Vorschubantrieb eine Feder (134) zwischen dem besagten Vorschubkupplungsgetriebe (136) und einem Gehäuse für die besagten Getriebezüge aufweist zur Verschie-bung des besagten Vorschubskupplungsgetrie-bes (136) gegen das besagte Antriebskupplungsgetriebe (138), wobei das besagte Vorschubskupplungsgetriebe (136) mit dem besagten Antriebskupplungsgetriebe (138) gekuppelt ist zum Vorschub der besagten Spindel (114), wenn diese bohrt, dadurch gekennzeichnet, daß der Bohrer mit Vorschubantrieb weiter einen positiven Anschlag (162, 163) zur Verhinderung des weiteren Vorschubs der besagten Spindel (114), wobei das besagte Vorschubskupplungsgetriebe durch die besagte Spindel (114) angetrieben wird, und eine Neigung auf den besagten Seitenzähnen (165, 166) auf einer Seite jedes Zahns, um die besagten Antriebs- und Kupplungsgetriebe in Eingriff zu bringen, damit das besagte Vorschubskupplungsgetriebe (136) über dem besagten Antriebskupplungsgetriebe (138) einrastet, wenn der besagte Spindelvorschub den besagten positiven Anschlag (162, 163) erreicht, aufweist.

12. Bohrer mit Vorschubantrieb nach Anspruch 11, dadurch gekennzeichnet, daß das besagte Geschwindigkeitskupplungsgetriebe über einen Flansch (172) rotierbar ist, der mit der besagten Welle (152) einstückig ist, und mit stationären Zähnen (176) auf dem besagten Gehäuse zum Eingriff mit Zähnen (175) auf dem besagten Vor-schubkupplungsgetriebe auf dessen dem besag-ten Antriebskupplungsgetriebe (138) gegenüber-liegenden Seite, betätigendem Mittel (142) zur Verschiebung der besagten Welle (152) gegen die besagte Feder (134), um das besagte Vorschubs-kupplungsgetriebe (136) vom besagten Antriebs-kupplungsgetriebe (138) außer Eingriff zu bringen und das besagte Vorschubskupplungsgetriebe gegen die besagten stationären Zähne (176) zu blockieren zum Rückzug der besagten Spindel (114), und durch Desaktivierung des besagten betätigbaren Mittels, um automatisch zu ermöglichen, daß das besagte Vorschubskupplungsgetriebe (136) von besagten stationären Zähnen (176) außer Eingriff kommt und mit dem besagten Antriebskupplungsgetriebe (138) in Eingriff kommt, nachdem die besagte Spindel zurückgezogen worden ist.

## Revendications

1. Perceuse à avance positive (10) ayant un train d'engrenages (51, 53, 54, 57) d'entraînement de l'arbre porte-foret et un train d'engrenages (58, 59, 60, 61) d'avance de l'arbre porte-foret et couplé en train d'engrenages d'entraînement par des dents latérales (78, 79) sur des engrenages d'accouplement d'entraînement et d'avance respectifs (51, 58) montes sur un arbre commun (52), dans laquelle la portée en rotation pour ledit engrenage d'accouplement d'avance (58) est sur une bride qui est d'une pièce avec ledit arbre (52), et un ressort (72) est prévu entre ledit engrenage d'accouplement d'avance (58) et un boîtier pour lesdits trains d'engrenages pour déplacer ledit engrenage d'accouplement d'avance (58) contre ladite bride, et ainsi pour déplacer ledit arbre dans une position dans laquelle ledit engrenage d'accouplement d'avance (58) est couplé audit engrenage d'entraînement (51), des dents fixes (77) sont prévues sur ledit boîtier pour un engrènement avec des dents (76) sur ledit engrenage d'accouplement d'avance (58) sur le côté de celui-ci opposé audit engrenage d'accouplement d'entraînement (51), des moyens actionnables sont prévus pour déplacer ledit arbre contre ledit ressort (72) pour désengrener ledit engrenage d'accouplement d'avance (58) dudit engrenage d'accouplement d'entraînement (51) et pour verrouiller ledit engrenage d'accouplement d'avance (58) contre lesdites dents fixes (77) pour retirer ledit arbre porte-foret, et par désactivation desdits moyens actionnables pour permettre automatiquement audit engrenage d'accouplement d'avance (58) d'être désengrené desdites dents fixes (77), caractérisée en ce que la perceuse à avance positive comporte aussi un système de point mort comprenant un moyen (82) déplacé par ressort, sensible au mouvement dudit arbre (52) dans une position dans laquelle ledit engrenage d'accouplement d'avance (58) s'engrène avec lesdites dents fixes (77) par actionnement dudit moyen actionnable (34) pour limiter le retour dudit arbre (52) par désactivation dudit moyen actionnable lorsque ledit moyen actionnable a été actionné pour déplacer ledit arbre (52) et ledit engrenage d'accouplement d'avance (58) en position verrouillée dudit engrenage d'accouplement d'avance, ledit moyen déplacé par ressort ayant une fente (80, 80') dont une dimension limite le retour dudit arbre de façon que ledit engrenage d'accouplement d'avance (58) soit désengrené desdites dents fixes (77) et ne soit pas réengrené avec lesdites dents dudit engrenage d'accouplement d'entraînement (51) jusqu'à ce que ledit moyen déplacé par ressort soit remis à zéro manuellement.

2. Perceuse à avance positive selon la revendication 1, caractérisée en ce que ledit moyen déplacé par ressort est une tige (82) dans un tube, ladite tige (82) étant perpendiculaire audit arbre (52) à une extrémité de celui-ci éloignée dudit ressort de retour pour ledit arbre et dudit engrenage d'accouplement d'avance et ayant une fente (80) pour recevoir ledit arbre (52), la profondeur de ladite fente (80) étant la dimension limite de retour, et un ressort (88) dans ledit tube étant prévu pour déplacer ladite tige (82) dans une position dans laquelle ladite fente (80) n'est pas sous ledit arbre (52) lorsque ledit moyen actionnable est actionné pour déplacer ledit arbre hors de ladite fente.

3. Perceuse à avance positive selon la revendication 2, caractérisée en ce que ledit tube est fermé à une extrémité et ladite tige (82) dépasse de l'extrémité dudit tube opposée à l'extrémité fermée de celui-ci, et un ressort à boudin de compression (88) est compris entre ladite tige (82) et ladite extrémité fermée dudit tube, de sorte que ledit système de point mort peut être remis à zéro en repoussant ladite tige dans ledit tube jusqu'à ce que ledit arbre (52) tombe dans ladite fente (80).

4. Perceuse à avance positive selon la revendication 3, caractérisée en ce que ledit tube comprend un ergot transversal (90) dans ladite fente (80) pour limiter l'ampleur du mouvement de ladite tige (82) hors dudit tube causé par ledit ressort à boudin de compression (88) lors de l'actionnement dudit moyen actionnable (34).

5. Perceuse à avance positive selon la revendication 4, caractérisée en ce que ledit moyen actionnable comprend un piston hydraulique (34) fixé à l'extrémité dudit arbre (52) éloignée de ladite tige (82).

6. Perceuse à avance positive selon la revendication 1, caractérisée en ce que ledit moyen déplacé par ressort fait tourner un disque (104a) sur un axe espacé de l'axe dudit arbre (52) d'une distance inférieure au rayon dudit disque, et en ce qu'il est prévu une entaille suffisante pour recevoir ledit arbre (52), une fente dans ledit arbre (52) d'une profondeur suffisante pour que ledit disque tourne, l'entaille de celui-ci étant éloignée dudit arbre, afin de placer ledit disque dans ladite fente (80) pour empêcher un retour total dudit arbre, la longueur de ladite fente déterminant l'étendue du retour jusqu'à ce que ledit disque soit remis manuellement à zéro, son entaille étant alignée avec ledit arbre, et un ressort à boudin de torsion (106) pour faire tourner automatiquement ledit disque (104a) depuis ladite position alignée lorsque ledit arbre est déplacé pour placer la fente de celui-ci en alignement avec ledit disque (104a).

7. Perceuse à avance positive selon la revendication 6, caractérisée en ce que ledit disque (104a) comprend un bouton incorporé (104) pour faire tourner manuellement ledit disque (104a) pour remettre à zéro ledit système de point mort.

8. Perceuse à avance positive selon la revendication 7, caractérisée en ce que ledit bouton (104) est d'un diamètre plus grand que ledit disque (104a), sauf sur un secteur limité qui s'étend depuis l'entaille dudit disque sur un angle inférieur à 90°, ce qui limite l'ampleur de rotation dudit disque lorsque ladite fente est alignée avec ledit disque.

9. Perceuse à avance positive selon la revendication 6, caractérisée en ce que ledit moyen actionnable comprend un piston hydraulique (34) à une extrémité dudit arbre.

10. Perceuse à avance positive selon la revendication 9 caractérisée en ce que ledit piston (34) est à l'extrémité dudit arbre (52) éloignée dudit disque (104a).

11. Perceuse à avance positive ayant un train d'engrenages (138, 153, 154, 157) d'entraînement de l'arbre porte-forêt et un train d'engrenages (136, 159, 160, 161) d'avance de l'arbre porte-foret, couplé au train d'engrenages d'entraînement par des dents latérales (165, 166) sur des engrenages d'accouplement d'entraînement et d'avance respectifs (138, 136) montés sur un arbre commun (152), ladite perceuse à avance positive comprenant un ressort (134) entre ledit engrenage d'accouplement d'avance (136) et un boîtier pour lesdits engrenages pour déplacer ledit engrenage d'accouplement d'avance (136) contre ledit engrenage d'accouplement d'entraînement (138), de sorte que ledit engrenage d'accouplement d'avance (136) soit couplé audit engrenage d'accouplement d'entraînement (138) pour faire avancer ledit arbre porte-foret (114) tandis qu'il perce, caractérisée en ce que la perceuse à avance positive comprend en outre une butée positive (162, 163) pour empêcher ledit arbre porte-foret (114) d'avancer encore plus, ce qui a pour effet que ledit engrenage d'accouplement d'avance est entraîné par ledit arbre porte-foret (114), et une pente sur lesdites dents latérales (165, 166) sur un côté de chaque dent pour engrener lesdits engrenages d'entraînement et d'accouplement afin de permettre audit engrenage d'accouplement d'avance (136) de s'encliqueter sur ledit engrenage d'accouplement d'entraînement (138) lorsque ladite avance de l'arbre porte-foret atteint ladite butée positive (162, 163).

12. Perceuse à avance positive selon la revendication 11, caractérisée en ce que la portée en rotation pour ledit engrenage d'accouplement de vitesse est sur une bride (172) qui est d'une pièce avec ledit arbre (152) et comportant des dents fixes (176) sur ledit boîtier pour un engrènement avec les dents (175) sur ledit engrenage d'accouplement d'avance sur le côté de celui-ci opposé audit engrenage d'accouplement d'entraînement (138), un moyen actionnable (142) pour déplacer ledit arbre (152) contre ledit ressort (134) pour désengrener ledit engrenage d'accouplement d'avance (136) dudit engrenage d'accouplement d'entraînement (138), et pour verrouiller ledit engrenage d'accouplement d'avance contre lesdites dents fixes (176) pour retirer ledit arbre porte-foret (114), et par désactivation dudit moyen actionnable pour permettre automatiquement audit engrenage d'accouplement d'avance (136) d'être désengrené desdites dents fixes (176) et réengrené avec ledit engrenage d'accouplement d'entraînement (138) après retrait dudit arbre porte-foret.

Prior Art
FIG. 1

FIG. 3

FIG 4a          FIG 4b

1

FIG. 2

FIG.5

FIG.6

FIG.7

FIG.8

FIG.9

FIG.10b

FIG.10a

FIG. 11

EP 0 169 109 B1

FIG.12

FIG.13

FIG 14b

FIG 14a

FIG 14